(19) Europäisches Patentamt
European Patent Office
Office européen des brevets

(11) EP 4 036 124 A1

(12) EUROPEAN PATENT APPLICATION
published in accordance with Art. 153(4) EPC

(43) Date of publication:
03.08.2022 Bulletin 2022/31

(21) Application number: 20866978.8

(22) Date of filing: 23.09.2020

(51) International Patent Classification (IPC):
*C08F 2/46* (2006.01) *C08G 59/18* (2006.01)
*C09D 133/04* (2006.01) *C09D 163/00* (2006.01)

(52) Cooperative Patent Classification (CPC):
C08F 2/46; C08G 59/18; C08J 7/04; C09D 133/04;
C09D 161/06; C09D 163/00; C09D 167/00;
C09D 167/06

(86) International application number:
PCT/CN2020/117189

(87) International publication number:
WO 2021/057804 (01.04.2021 Gazette 2021/13)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.09.2019 CN 201910936201

(71) Applicant: Changzhou Green Photosensitive Materials Co., Ltd.
Changzhou, Jiangsu 213000 (CN)

(72) Inventor: QIAN, Bin
hangzhou, Jiangsu 213000 (CN)

(74) Representative: Biggi, Cristina
Bugnion S.p.A.
Viale Lancetti 17
20158 Milano (IT)

# (54) CATIONIC CURING COMPOSITION FOR PLASTIC SUBSTRATE, COATING MATERIAL, PLASTIC PRODUCT AND APPLICATION

(57) The disclosure provides a cationic curing composition for a plastic substrate, a coating material including the composition and an application of the composition in the field of energy curing. The cationic curing composition includes a polyhydroxy resin, an epoxy compound, an oxetanyl-containing compound, and a cationic initiator, the polyhydroxy resin is a polyester resin, an acrylic resin and/or a phenolic resin, and the molar ratio of a hydroxyl, a three-membered epoxy group to a four-membered epoxy group in the cationic curing composition is 1:(3-20):(1-25). A plastic product includes the plastic substrate and a coating layer, and the coating layer is formed by curing the cationic curing composition.

EP 4 036 124 A1

## Description

Technical Field

The present disclosure relates to the field of photocuring, in particular to a cationic curing composition for a plastic substrate, a coating material, a plastic product and an application.

Background

At present, there are many types of plastics on the market. According to uses thereof, the plastics may be classified into general plastics and engineering plastics; and according to chemical composition thereof, the plastics may be classified into polystyrene (PS), polymethyl methacrylate (PMMA), polypropylene (PP), polycarbonate (PC), polyethylene (PE), and polyethylene terephthalate (PET) and the like. Plastic substrates can be widely used in vehicles, household appliances, construction, industries and the like due to inexpensive prices. However, the plastic substrate will generate various surface defects after machining, and the surface of the plastic substrate is vulnerable to damage during downstream application. Therefore, a layer of a thermosetting or photofixing coating is usually applied on the surface of the plastic substrate to harden the surface of the substrate.

The prior art provides a coating material composition, and it may solve problems of poor scratch resistance and poor hardness of a substrate while applied to the plastic substrate. Another prior art document provides a coating material composition for a plastic substrate, which solves the problem of poor adhesion, wear resistance and weatherability of a coating applied to a plastic substrate. However, the above two coating material compositions have the poor flexibility. Especially in the absorbent packaging industry, higher flexibility of the coating is required.

Therefore, it is necessary to develop a coating material composition with excellent flexibility and good adhesion on the plastic substrate, so as to satisfy the development requirements of the coating industry.

Summary

A main purpose of the present disclosure is to provide a cationic curing composition for a plastic substrate, a coating material, a plastic product and an application, so as to solve problems of poor flexibility and adhesion while an existing coating material is applied to the plastic substrate.

In order to achieve the above purpose, according to one aspect of the present disclosure, a cationic curing composition for the plastic substrate is provided, and the cationic curing composition for the plastic substrate includes: a polyhydroxy resin (A), an epoxy compound (B), an oxetanyl-containing compound (C) and a cationic initiator (D), where the polyhydroxy resin (A) includes, but is not limited to, one or more of a group consisting of a polyester resin (A1), an acrylic resin (A2) and a phenolic resin (A3), and the molar ratio of a hydroxyl, a three-membered epoxy group to a four-membered epoxy group in the cationic curing composition is 1:(3-20):(1-25).

Further, in the cationic curing composition for the plastic substrate, the molar ratio of the hydroxyl, the three-membered epoxy group to the four-membered epoxy group is 1:(3-10):(5-15).

Further, in parts by weight, the cationic curing composition for the plastic substrate includes: 5-40 parts of the polyhydroxy resin (A), 10-65 parts of the epoxy compound (B), 10-70 parts of the oxetanyl-containing compound (C) and 0.5-10 parts of the cationic initiator (D).

Further, in parts by weight, the cationic curing composition for the plastic substrate includes: 5-30 parts of the polyhydroxy resin (A), 15-50 parts of the epoxy compound (B), 20-60 parts of the oxetanyl-containing compound (C) and 2-5 parts of the cationic initiator (D).

Further, the hydroxyl value of the polyester resin (A1) is 50-500mgKOH/g, and the number-average molecular weight is 200-12000; and preferably, the hydroxyl value of the polyester resin (A1) is 80-350mgKOH/g, and the number-average molecular weight is 300-5000.

Further, the hydroxyl value of the acrylic resin (A2) is 15-200mgKOH/g, the glass transition temperature is 10-150°C, and the number-average molecular weight is 500-20000; and preferably, the hydroxyl value of the acrylic resin (A2) is 50-150mgKOH/g, the glass transition temperature is 20-100°C, and the number-average molecular weight is 1000-8000.

Further, the hydroxyl value of the phenolic resin (A3) is 50-300mgKOH/g, and the number-average molecular weight is 300-15000; and preferably, the hydroxyl value of the phenolic resin (A3) is 100-250 mgKOH/g, and the number-average molecular weight is 500-8000.

Further, the epoxy compound (B) is selected from an alicyclic epoxy compound and/or an aliphatic epoxy compound; preferably, the epoxy equivalent weight of the alicyclic epoxy compound is 80-500; and preferably, the epoxy equivalent weight of the aliphatic epoxy compound is 80-500.

Further, in parts by weight, the cationic curing composition for the plastic substrate further includes but not

limited to 0-40 parts of an assistant (E); preferably, the cationic curing composition for the plastic substrate includes but not limited to 1-10 parts of the assistant (E); and preferably, the assistant (E) includes but is not limited to one or more of a group consisting of a sensitizer, a color material, a flame retardant, a leveling agent, a curing accelerator, a light/thermal acid generator, an adhesion promoter, an ultraviolet absorber, an anti-agglomeration agent, a thickener, a nucleating agent, a coupling agent, a filler, a plasticizer, an impact resistant modifier, a lubricant, an antimicrobial agent, a mold release agent, a heat stabilizer, an antioxidant, a light stabilizer, a compatibilizer, a colorant, a stabilizer, a separant, an antistatic agent, a defoamer, and a fire retardant.

Another aspect of the present disclosure further provides a coating material, and the coating material includes the above cationic curing composition for the plastic substrate.

Another aspect of the present disclosure further provides a plastic product including a plastic substrate and a coating layer, the coating layer is coated on at least a partial region of the plastic substrate, and the coating layer is formed by curing the above cationic curing composition for the plastic substrate.

Another aspect of the present disclosure further provides an application of the above cationic curing composition for the plastic substrate in the field of energy curing.

By applying a technical solution of the present disclosure, and under the initiation of the initiator (D), the polyhydroxy resin (A), the epoxy compound (B) and the oxetanyl-containing compound (C) may undergo a curing reaction, to form the coating layer. The addition of the epoxy compound (B) and the oxetanyl-containing compound (C) is beneficial to improve the curing rate of the coating layer. The addition of the polyhydroxy resin (A) increases the cross-linking density and improve the adhesion of the coating layer on a metal substrate. The addition of the oxetanyl-containing compound (C) is beneficial to improve the compatibility of each component. The molar ratio of the hydroxyl, the three-membered epoxy group to the four-membered epoxy group in the above cationic curing composition is limited within the above range, and it may greatly improve the adhesion, the flexibility, the film-forming property and the curing rate of the coating layer on the plastic substrate.

## Detailed Description of the Embodiments

It should be noted that embodiments in the present disclosure and features of the embodiments may be combined with each other in the case without conflicting. The present disclosure is described in detail below with reference to the embodiments.

As described in the background, an existing plastic packaging coating material suffers from poor flexibility and adhesion. In order to solve the above technical problems, the present application provides a cationic curing composition for a plastic substrate, and the cationic curing composition for the plastic substrate includes: a polyhydroxy resin (A), an epoxy compound (B), an oxetanyl-containing compound (C) and a cationic initiator (D), where the polyhydroxy resin (A) includes, but is not limited to, one or more of a group consisting of a polyester resin (A1), an acrylic resin (A2) and a phenolic resin (A3), and the molar ratio of a hydroxyl, a three-membered epoxy group to a four-membered epoxy group in the cationic curing composition is 1:(3-20):(1-25).

Under the initiation of the initiator (D), the polyhydroxy resin (A), the epoxy compound (B) and the oxetanyl-containing compound (C) may undergo a curing reaction, to form the coating layer. The addition of the epoxy compound (B) and the oxetanyl-containing compound (C) is beneficial to improve the curing rate of the coating layer. The addition of the polyhydroxy resin (A) increases the cross-linking density and improve the adhesion of the coating layer on a metal substrate. The addition of the oxetanyl-containing compound (C) is beneficial to improve the compatibility of each component. The molar ratio of the hydroxyl, the three-membered epoxy group to the four-membered epoxy group in the above cationic curing composition is limited within the above range, and it may greatly improve the adhesion, the flexibility, the film-forming property and the curing rate of the coating layer on the plastic substrate.

In order to further improve the comprehensive performance of the coating layer formed by the above cationic curing composition, in one preferred embodiment, in the cationic curing composition for the plastic substrate, the molar ratio of the hydroxyl, the three-membered epoxy group to the four-membered epoxy group is 1:(3-10):(5-15).

In one preferred embodiment, in parts by weight, the cationic curing composition for the plastic substrate includes: 5-40 parts of the polyhydroxy resin (A), 10-65 parts of the epoxy compound (B), 10-70 parts of the oxetanyl-containing compound (C) and 0.5-10 parts of the cationic initiator (D). The amount of each component in the above cationic curing composition includes but is not limited to the above range, and limiting it within the above range may further exert the synergistic effect of each component, thereby the adhesion and flexibility and the like of the coating layer formed by it is further improved. More preferably, in parts, the cationic curing composition for the plastic substrate includes: 5-30 parts of the polyhydroxy resin (A), 15-50 parts of the epoxy compound (B), 20-60 parts of the oxetanyl-containing compound (C) and 2-5 parts of the cationic initiator (D).

**<Polyhydroxy resin (A)>**

The polyhydroxy resin (A) is at least one selected from the polyester resin (A1), the acrylic resin (A2), and the phenolic resin (A3), or may be a mixture of two or more.

The polyester resin (A1) of the present disclourse is prepared by polycondensation of a polybasic acid and a polyhydric alcohol. The polycondensation reaction is performed in an inert atmosphere at a temperature of 100 to 260°C, preferably 130 to 220°C.

The polybasic acid refers to a compound containing a plurality of carboxyls directly connected to a hydroxyl in a molecule, and may be divided into an aliphatic acid, an alicyclic acid, and an aromatic acid. In one preferred embodiment, the polybasic acid includes but is not limited to one or more in a group consisting of adipic acid, 1,4-cyclohexanedicarboxylic acid, fumaric acid, sebacic acid, maleic anhydride, phthalic acid, terephthalic acid, isophthalic acid, trimellitic anhydride, pyromellitic acid, tetrahydrophthalic acid, hexahydrophthalic acid, hexahydroterephthalic acid, dichlorophthalic acid, tetrachlorophthalic acid and phthalic anhydride. More preferably, the above polybasic acid includes but is not limited to one or more in a group consisting of adipic acid, 1,4-cyclohexanedicarboxylic acid, phthalic acid, isophthalic acid, terephthalic acid and phthalic anhydride.

The polyhydric alcohol refers to a compound containing a plurality of hydroxyl groups directly connected to an aliphatic carbon chain in a molecule. In one preferred embodiment, the above polyhydric alcohol includes but is not limited to one or more in a group consisting of ethylene glycol, diethylene glycol, 1,2-propanediol, 1,3-propanediol, 1,4-butanediol, 1,3-butanediol, 2,3-butanediol, Di-β-hydroxyethylbutanediol, 1,5-pentanediol, 1,6-hexanediol, 1,8-octanediol, decanediol, dodecanediol, neopentyl glycol, cyclohexanediol, 1,4-cyclohexane dimethanol, methylpropyleneglycol, hydroxytertivalate neopentyl glycol ester, ethyl butyl propylene glycol, 2,2,4-trimethyl-1,3-pentanediol, 2,2-bis-(4-hydroxycyclohexyl)propane, 2-methyl-propane-1,3-diol, 2-methyl-pentane-1,5-diol, 2,2,4(2,4,4)-trimethylhexane-1,6-diol, glycerol, trimethylolpropane, trimethylolethane, hexane-1,2,6-triol, butane-1,2,4-triol, pentaerythritol, mannitol and sorbitol, as well as diethylene glycol, triethylene glycol, tetraethylene glycol, dipropylene glycol, polypropylene glycol, polybutylene glycol, xylylene dimethanol and hydroxypentanoic acid neopentyl glycol ester; and more preferably, the above polyhydric alcohol includes but is not limited to one or more in a group consisting of ethylene glycol, neopentyl glycol, pentaerythritol, 1,6-ethylene glycol, methyl propylene glycol, hydroxytertivalate neopentyl glycol ester, ethyl butyl propylene glycol, 2,2,4-trimethyl-1,3-pentanediol, 1,4-cyclohexanedimethanol, cyclohexanedimethanol, cyclohexane dimethanol, trimethylolpropane, and glycerol.

In one preferred embodiment, the hydroxyl value of the above polyester resin (A1) is 50-500mgKOH/g. Compared with other hydroxyl values, the hydroxyl value of the polyester resin (A1) is limited within the above range, and it is beneficial to improve the adhesion, processability and cross-linking density of the coating layer to the plastic substrate, and further to suppress brittling during curing of the lacquer film due to enthalpy relaxation. More preferably, the hydroxyl value of the polyester resin (A1) is 80-350mgKOH/g.

In one preferred embodiment, the number-average molecular weight of the polyester resin (A1) is 200-12000. Compared with other ranges, the molecular weight of the polyester resin (A1) is limited within the above range, and it is beneficial to improve the strength of the coating layer, and convenient for a painting operation. More preferably, the number-average molecular weight of the above polyester resin is 300-5000.

The acrylic resin (A2) in the present disclosure refers to a polymer obtained by copolymerization of acrylates or methacrylates and other olefinic monomers. At least one of the (methyl)acrylates or other olefinic monomers is a functional monomer containing a hydroxyl, and the functional monomer containing the hydroxyl group is preferably a structure as follows:

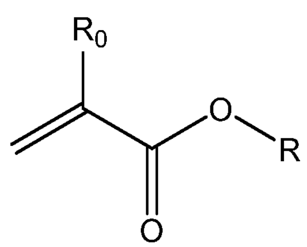
,

where, $R_0$ is H, or $CH_3$; R is a linear or branched alkyl alcohol of $C_2$-$C_{10}$.

In one preferred embodiment, the above functional monomer containing the hydroxyl is selected from one or more in a group consisting of hydroxyethyl acrylate, hydroxybutyl acrylate, hydroxyethyl methacrylate, hydroxybutyl methacrylate, hydroxypropyl acrylate, hydroxypropyl methacrylate, 4-hydroxybutyl acrylate, alcohol allyl, cinnamyl alcohol, citronellol and 2-hexen-1-ol.

In another preferred embodiment, the above functional monomer without the hydroxyl is selected from one or

more in a group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, hexyl acrylate, hexyl methacrylate, acrylamide, glycidyl acrylate, dimethylaminopropyl acrylate, tetrahydrofuran methyl acrylate, fluoroalkyl acrylate, acrylonitrile or styrene.

In one preferred embodiment, the hydroxyl value of the above acrylic resin (A2) is 15-200mgKOH/g. Compared with other ranges, the hydroxyl value of the acrylic resin (A2) of the present application is within the above range, and it is beneficial to further improve the adhesion, processibility and cross-linking density of the coating layer formed by it and the plastic substrate, and further to suppress brittling during curing of the lacquer film due to enthalpy relaxation. More preferably, the hydroxyl value of the acrylic resin (A2) is 50-150mgKOH/g.

In one preferred embodiment, the glass transition temperature (Tg) of the above acrylic resin (A2) is 10 to 150°C. Compared with other ranges, the glass transition temperature of the acrylic resin (A2) is limited within the above range, which is advantageous for improving the compatibility between the acrylic resin (A2) and other components in the composition, and further improving the film-forming property of the above cationic curing composition is improved. More preferably, the glass transition temperature (Tg) of the above acrylic resin (A2) is 20 to 100°C.

In one preferred embodiment, the number-average molecular weight of the above acrylic resin (A2) is 500-20000. Compared with other ranges, the molecular weight of the acrylic resin is in the above range, which helps to increase the strength of the coating layer. More preferably, the number-average molecular weight of the above acrylic resin (A2) is 1000-8000.

The phenolic resin (A3) used in the present application may be a phenolic resin obtained by a condensation reaction of a phenolic compound and an aliphatic aldehyde compound under an acidic or basic condition. Preferably, the phenolic compound is one or more of phenol, o-cresol, m-cresol, p-cresol, o-ethylphenol, m-ethylphenol, p-ethylphenol, o-butylphenol, m-butylphenol, p-butylphenol, p-tert-butylphenol, p-tert-octylphenol, p-nonylphenol, bisphenol A, p-phenylphenol, 2,3-dimethylphenol, 2,4-dimethylphenol, 2,5-dimethylphenol, 2,6-dimethylphenol, 3,4-dimethylphenol, 3,5-dimethylphenol, 2,3,5-tricresol, 3,4,5-tricresol, hydroquinone, resorcinol, $\alpha$-naphthol and $\beta$-naphthol. Preferably, the phenolic compound is one or more of phenol, hydroquinone, p-tert-octylphenol, p-nonylphenol, bisphenol A, p-phenylphenol, o-cresol, m-cresol, p-cresol, p-tert-butylphenol and $\alpha$-naphthol. The aliphatic aldehyde compound is an aldehyde containing $C_1$-$C_8$, and examples thereof includes: formaldehyde, p-formaldehyde, acetaldehyde, propionaldehyde, acrolein, butyraldehyde, 2-butenal, valeraldehyde, and trimethylacetaldehyde.

The phenolic resin (A3) used in the present disclosure may also be an epoxy-modified phenolic resin, which is not limited to a modification method.

Preferably, the hydroxyl value of the phenolic resin (A3) is 50-300mgKOH/g, and more preferably 100-250mgKOH/g. The number-average molecular weight of the phenolic resin used in the present disclosure is 300-15000, and more preferably 500-8000.

**<Epoxy compound (B)>**

The epoxy compound of the present disclosure is preferably an alicyclic epoxy compound and an aliphatic epoxy compound.

Examples of the above alicyclic epoxy compound include polyglycidyl ether compound of polyhydric alcohol having at least one alicyclic ring, or epoxy-containing cyclohexane or epoxy-cyclopentane obtained by epoxidizing a compound containing cyclohexene or cyclopentene ring with an oxidizing agent. For example, hydrogenated bisphenol A diglycidyl ether, 3,4-epoxycyclohexylmethyl-3,4-epoxycyclohexanecarboxylate, 3,4-epoxy-1-methylcyclohexyl-3,4-epoxy-1-methylhexanecarboxylate, 6-methyl-3,4-epoxycyclohexylmethyl-6-methyl-3,4-epoxycyclohexanecarboxylate, 3,4-epoxy-3-methylcyclohexylmethyl-3,4-epoxy-3-methylcyclohexanecarboxylate, 3,4-epoxy-5-methylcyclohexylmethyl-3,4-epoxy-5-methylcyclohexanecarboxylate, bis(3,4-epoxycyclohexylmethyl)adipate, 3,4-epoxy-6-methylcyclohexanecarboxylate, methylenebis(3,4-epoxycyclohexane), propane-2,2-diyl-bis(3,4-epoxycyclohexane), 2,2-bis(3,4-epoxycyclohexyl)propane, dicyclopentadiene diepoxide, ethylenebis(3,4-epoxycyclohexanecarboxylate), dioctyl epoxyhexahydrophthalate, di-2-ethylhexyl epoxyhexahydrophthalate, 1-epoxyethyl-3,4-epoxycyclohexane, 1,2-epoxy-2-epoxyethylcyclohexane, $\alpha$-pinene oxide, limonene dioxide and the like.

The above alicyclic epoxy compound is preferably a compound having an epoxy equivalent weight of 80-500.

The above alicyclic epoxy compound may adopt a commercial item, for example, CELLOXIDE2021P, CELLOXIDE2081, CELLOXIDE2000, and CELLOXIDE3000 (made by Daicel Corporation).

The above aliphatic epoxy compound refers to an epoxy compound which is not classified into the aromatic epoxy compound or the alicyclic epoxy compound. Examples thereof include monofunctional epoxy compounds such as glycidyl etherides of aliphatic alcohols, glycidyl esters of alkyl carboxylic acids, polyglycidyl etherides of aliphatic polyols or alkylene oxide adducts thereof, and polyglycidyl esters of aliphatic long-chain polyacids. As a representative compound, it may be listed as propyl glycidyl ether, butyl glycidyl ether, 2-ethylhexyl glycidyl ether, C12-13 mixed alkyl glycidyl ether, 1,4-butanediol diglycidyl ether, 1,6-hexanediol diglycidyl ether, triglycidyl ether of glycerol, triglycidyl ether

of trimethylolpropane, tetraglycidyl ether of sorbitol, hexaglycidyl ether of dipentaerythritol, diglycidyl ether of polyethylene glycol and glycidyl ether of polyhydric alcohol such as diglycidyl ether of polypropylene glycol, and a polyglycidyl etherate of a polyether polyol, a diglycidyl ester of an aliphatic long-chain diacid, obtained by adding one or more alkylene oxides to an aliphatic polyol such as propylene glycol, trimethylolpropane, glycerol, or the like. Further, examples thereof include monoglycidyl ether of aliphatic higher alcohol or glycidyl ester of higher fatty acid, epoxidized soybean oil, octyl epoxystearate, butyl epoxystearate, epoxidized soybean oil, epoxidized polybutadiene and the like.

The above aliphatic epoxy compound is preferably a compound having an epoxy equivalent weight of 80-500.

The above aliphatic epoxy compound may adopt a commercial item, and for example, it may be listed as Denacol EX-121, Denacol EX-171, Denacol EX-192, Denacol EX-211, Denacol EX-212, Denacol EX-313, Denacol EX-314, Denacol EX-321, Denacol EX-411, Denacol EX-421, Denacol EX-512, Denacol EX-521, Denacol EX-611, Denacol EX-612, Denacol EX-614, Denacol EX-622, Denacol EX-810, Denacol EX-811, Denacol EX-850, Denacol EX-851, Denacol EX-821, Denacol EX-830, Denacol EX-832, Denacol EX-841, Denacol EX-861, Denacol EX-911, Denacol EX-941, Denacol EX-920, Denacol EX-931 (made by Nagase ChemteX Corporation), Epolight M-1230, Epolight 40E, Epolight 100E, Epolight 200E, Epolight 400E, Epolight 70P, Epolight 200P, Epolight 400P, Epolight 1500NP, Epolight 1600, Epolight 80MF, Epolight 100MF (made by Kyoeisha Chemical Co., Ltd.), Adeka Glycirol ED-503, Adeka Glycirol ED-503G, Adeka Glycirol ED-506, Adeka Glycirol ED-523T (made by ADEKA Corporation) and the like.

**<Oxetanyl-containing compound (C)>**

Compared with a composition containing only an epoxy group and without an oxetane group, the curing rate of the composition may be accelerated while both the oxetane group and the epoxy group are contained at the same time. At the same time, the presence of the oxetane group also improves the flexibility of the lacquer film made from the composition, so that a plastic product is not easy to crack and damage during the subsequent treatment process.

In the presence of the cationic initiator, the oxetanyl-containing compound (C) may be polymerized or crosslinked by light irradiation. The oxetanyl-containing compound may contain one or more oxetanyls.

For the consideration of preparation cost and reactivity, the following structures are selected as the oxetanyl-containing compound (C) in the present disclosure:

In one preferred embodiment, the oxetanyl-containing compound (C) contains an oxetanyl, and the structural formula is shown in Formula (1):

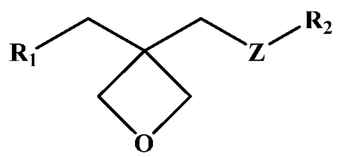

(1),

where Z is an oxygen atom.

$R_1$ includes but not limited to a hydrogen atom, an alkyl with 1-6 carbon atoms (such as methyl, ethyl, propyl or butyl) or an aryl with 6-18 carbon atoms (such as phenyl and naphthyl, furanyl or thienyl); $R_2$ includes but not limited to a hydrogen atom, an epoxy group, an alkyl with 1-6 carbon atoms (such as methyl, ethyl, propyl and butyl), an aryl with 6-18 carbon atoms (such as phenyl, naphthyl and anthracenyl), a substituted or unsubstituted aralkyl with 7-18 carbon atoms (such as benzyl, fluorobenzyl, methoxybenzyl, phenethyl, styryl, cinnamyl or ethoxybenzyl) or a group with other aromatic rings (such as aryloxyalkyl, for example phenoxymethyl or phenoxyethyl).

Preferably, the compound (C) containing only one oxetanyl in the molecule is selected from one or more in a group consisting of 3-ethyl-3-hydroxymethyloxetane, 3-(methly)allyloxymethyl-3-ethyloxetane, (3-ethyl-3-oxetanylbutylmethoxy)toluene, (3-ethyl-3-oxetanylbutylmethoxy)benzene, 4-methoxy-(1-(3-ethyl-3-oxetanylbutylmethoxy)methyl)benzene, (1-(3-ethyl-3-oxetanylbutylmethoxy)ethyl)phenylate, isobutoxymethyl(3-ethyl-3-oxetanylbutylmethyl)ether, 2-ethylhexyl(3-ethyl-3-oxetanylbutylmethyl)ether, ethyldiethylene glycol (3-ethyl-3-oxetanylbutylmethyl)ether, dicyclopentadiene(3-ethyl-3-oxetanylbutylmethyl)ether, dicyclopentyloxyethyl(3-ethyl-3-oxetanylbutylmethyl)ether, dicyclopentyl(3-ethyl-3-oxetanylbutylmethyl)ether, tetrabromophenyl(3-ethyl-3-oxetanylbutylmethyl)ether, 2-tetrabromophenoxyethyl(3-ethyl-3-oxetanylbutylmethyl)ether, tribromophenyl(3-ethyl-3-oxetanylbutylmethyl)ether, 2-tribromophenoxyethyl(3-ethyl-3-oxetanylbutylmethyl)ether, 2-hydroxyethyl(3-ethyl-3-oxetanylbutylmethyl)ether, 2-hydroxypropyl(3-ethyl-3-oxetanylbutylmethyl)ether, butoxyethyl(3-ethyl-3-oxetanylbutylmethyl)ether, pentachlorophenyl(3-ethyl-3-oxetanylbutylmethyl)ether, and pentabromophenyl (3-ethyl-3-oxetanylbutylmethyl)ether.

In another preferred embodiment, the oxetanyl-containing compound (C) contains two oxetanyls, and the structural formula is shown in Formula (2):

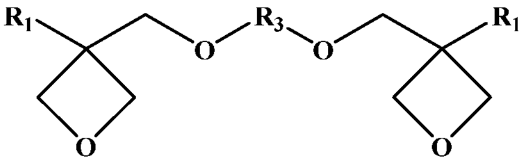

(2)，

where $R_1$ is the same as defined in the above Formula (1).

$R_3$ includes but not limited to a straight-chain or branched-chain alkylene having 1-20 carbon atoms (such as ethylidene, propylidene or butylidene), a straight-chain or branched-chain poly(alkyleneoxy) having 1-120 carbon atoms (such as poly(ethyleneoxy) or poly(propyleneoxy)), and a straight-chain or branched-chain unsaturated hydrocarbyl (such as 1,3-propylidene, methyl 1,3-propylidene or butylidene).

Preferably, $R_3$ includes but not limited to multivalent groups shown in the following Formulas (3) and (4):

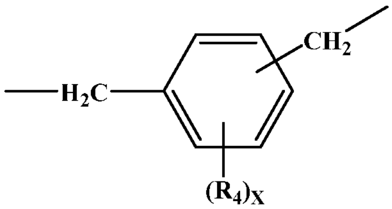

(3),

where $R_4$ includes but not limited to an alkyl having 1-4 carbon atoms, an alkoxy having 1-4 carbon atoms, a halogen atom (such as a chlorine atom or a bromine atom), a nitro group, a cyano group, a sulfhydryl, a carboxyl group or an amino formyl group, where x is an arbitrary integer from 0-4.

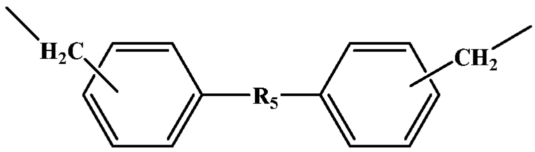

(4),

where $R_5$ represents an oxygen atom, a sulfur atom, a methylene group, -NH-, -SO-, $-SO_2-$, $-C(CF_3)_2-$ or $-C(CH_3)_2-$.

In another preferred embodiment, the oxetanyl-containing compound (C) contains two oxetanyls, and the structural formula is shown in Formula (5):

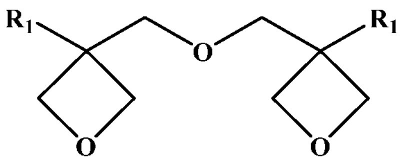

(5),

in Formula (5), $R_1$ is the same as that of the above Formula (1).

Examples of a compound containing three or more oxetanyls in a molecule are shown in the following Molecular formula (6):

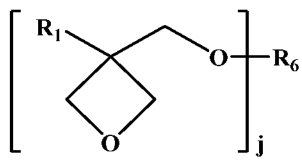

(6),

where, $R_1$ is the same as defined in the above Molecular formula (1); and $R_6$ includes but not limited to an organic group with a valency of 3-10.

Preferably, the compound containing two or more oxetanyls in the molecule includes but not limited to one or more in a group consisting of 3,7-bis(3-oxacyclobutyl)-5-oxa-nonane, 3,3'-(1,3-(2-methylene(methylenyl))propanediyl-bis(oxymethylene)bis-(3-ethyloxetane), 1,4-bis[(3-ethyl-3-oxetanylbutylmethoxy)methyl]benzene, 1,2-bis((3-ethyl-3-oxoheterocyclic butylmethoxy)methyl)ethane, 1,3-bis(3-ethyl-oxacyclobutylmethoxy)methyl)propane, ethylene glycol bis(3-ethyl-3-oxacyclobutylmethoxy)ether, dicyclopentenylbis(3-ethyl-3-oxacyclobutylmethoxy)ether, triethylene glycol bis(3-ethyl-3-oxacyclobutylmethoxy)ether, tetraethylene glycol bis(3-ethyl-3-oxacyclobutylmethoxy)ether, tricyclodecanediyl dimethylene(3-ethyl-3-oxacyclobutylmethoxy)ether, trimethylolpropane tris(3-ethyl-3-oxacyclobutylmethoxy)ether, 1,4-bis(3-ethyl-3-oxacyclobutylmethoxy)butane, 1,6-bis(3-ethyl-3-oxacyclobutylmethoxy)hexane, pentaerythritol tris(3-ethyl-3-oxacyclobutylmethoxy)ether, pentaerythritol tetra(3-ethyl-3-oxacyclobutylmethoxy)ether, polyethylene glycol bis(3-ethyl-3-oxacyclobutylmethoxy)ether, dipentaerythritol hexa(3-ethyl-3-oxacyclobutylmethoxy)ether, dipentaerythritol penta(3-ethyl-3-oxacyclobutylmethoxy)ether, dipentaerythritol tetra(3-ethyl-3-oxacyclobutylmethoxy)ether, and ditrimethylolpropane tetra(3-ethyl-3-oxacyclobutylmethoxy) ether.

Preferably, the oxetane includes but not limited to components defined by Formula (1), where $R_1$ is a hydrogen atom, and a $C_1$-$C_4$ alkyl; Z is an oxygen atom; and $R_2$ is a hydrogen atom, an epoxy group, a $C_1$-$C_4$ alkyl, or a phenyl. More preferably, $R_1$ includes but not limited to one or more in a group consisting of 3-ethyl-3-hydroxymethyloxetane, (3-ethyl-3-oxacyclobutylmethoxy)toluene, 3-benzyloxymethyl-3-ethyloxetanyl, (3-ethyl-3-oxacyclobutylmethoxy)benzene, 3,3'-[oxybismethylene] bis [3-ethyl] oxetane, 3-ethyl-3- [(ethylene oxide-2-methoxy)methyl] oxetane, 2-ethylhexyl(3-ethyl-3-oxacyclobutylmethoxy)ether, 1,4-bis((3-ethyl-3-oxacyclobutylmethoxy)methyl)benzene, 1,2-bis((3-ethyl-3-oxacyclobutylmethoxy)methyl)ethane, 1,3-bis((3-ethyl-3-oxacyclobutylmethoxy)methyl)propane, and bis(3-ethyl-3-oxacyclobutylmethoxy).

From the perspective of reactivity, while the molar ratio of the oxetane group to the epoxy group is (5-15):(3-10), it is beneficial to improve the activity of the cationic curing composition on the light radiation. From the perspective of the application performance of the composition, and while the molar ratio of the hydroxyl, the three-membered epoxy group to the four-membered epoxy group is 1:(3-10):(5-15), it is beneficial to improve the flexibility of the lacquer film prepared by the cationic curing composition, and has the good adhesion to the plastic substrate.

**<Cationic initiator (D)>**

The cationic initiator is a compound that may generate a cation or a Lewis acid under irradiation with active energy rays such as ultraviolet rays and electron rays, and may initiate polymerization of cationic curing components such as the epoxy compound and the oxetanyl-containing compound.

In the cationic curing composition provided in the present disclosure, the cationic initiator (D) may be a type commonly used in the field. It is preferably one or two of an iodonium salt, a sulfonium salt or an aryl ferrocene salt. Based on the consideration of comprehensive factors such as the cost and the effect of combined use (such as photoinitiation efficiency, and curing rate), it is more preferably an iodonium salt and/or sulfonium salt photoinitiator, and especially preferably compounds having structures shown in the following general formulas:

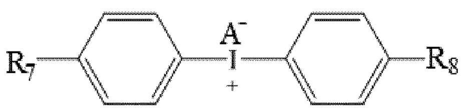
,
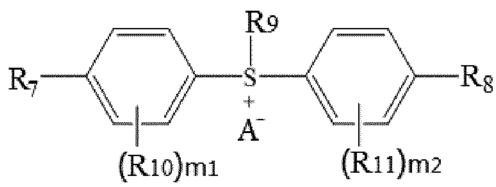
.

In the above general formulas, $R_7$ and $R_8$ each independently include but not limited to hydrogen, a $C_1$-$C_{20}$ straight-chain or branched-chain alkyl, a $C_4$-$C_{20}$ cycloalkyl alkyl or alkyl cycloalkyl, and the non-cyclo-$CH_2$- in the groups above may be optionally substituted by -O-, -S- or 1,4-phenylene.

$R_9$ includes but not limited to a $C_6$-$C_{20}$ substituted or unsubstituted aryl, a $C_6$-$C_{20}$ substituted or unsubstituted alkyl aryl, a $C_1$-$C_{20}$ straight-chain or branched-chain alkyl, a $C_4$-$C_{20}$ cycloalkyl alkyl or alkyl cycloalkyl, and a substituted or unsubstituted phenylthiophenyl, and acyclic -$CH_2$- in these groups may be optionally substituted by carbonyl, -O-, -S- or 1,4-phenylene.

$R_{10}$ and $R_{11}$ each independently include but not limited to alkyl, hydroxy, alkoxy, alkylcarbonyl, arylcarbonyl, alkoxycarbonyl, aryloxycarbonyl, arylthiocarbonyl, acyloxy, arylthio, aryl, heterocyclic hydrocarbyl, aryloxy, alkylsulfinyl, arylsulfinyl, alkylsulfonyl, arylsulfonyl, hydroxy(poly)alkyleneoxy, substitutable amino, cyano, nitro or halogen atom, and $m_1$ and $m_2$ each independently include but not limited to an integer from 0-4.

$A^-$ is independently selected from $X^-$, $ClO_4^-$, $CN^-$, $HSO_4^-$, $NO_3^-$, $CF_3COO^-$, $(BX_4)^-$, $(SbX_6)^-$, $(AsX_6)^-$, $(PX_6)^-$, $Al[OC(CF_3)_3]_4^-$, sulfonate ion, $B(C_6X_5)_4^-$ or $[(Rf)_bPF_{6-b}]^-$, where X is a halogen, Rf represents an alkyl in which ≥80% of

hydrogen atoms are substituted by fluorine atoms, b represents an integer of 1-5, and b Rf groups are the same or different from each other.

$R_7$ and $R_8$ each independently include but not limited to hydrogen, a $C_1$-$C_{12}$ strainght-chain or branched-chain alkyl, a $C_4$-$C_{10}$ cycloalkyl alkyl or alkyl cycloalkyl, and a $C_6$-$C_{12}$ substituted or unsubstituted aryl, and acyclic $-CH_2-$ in these groups may be optionally substituted by -O-, -S- or 1,4-phenylene.

$R_9$ includes but not limited to a $C_6$-$C_{10}$ substituted or unsubstituted aryl, a $C_6$-$C_{10}$ substituted or unsubstituted alkylaryl, and a substituted or unsubstituted phenylthiophenyl, and acyclic $-CH_2-$ in these groups may be optionally substituted by carbonyl, -O-, -S- or 1,4-phenylene.

$R_{10}$ and $R_{11}$ each independently include but not limited to a $C_1$-$C_{10}$ straight-chain or branched-chain alkyl, a $C_1$-$C_{10}$ straight-chain or branched-chain alkoxy, a $C_1$-$C_{10}$ alkyl carbonyl or a halogen.

In one preferred embodiment, a cationic moiety in the cationic initiator (D) includes but not limited to one or more of the following structures:

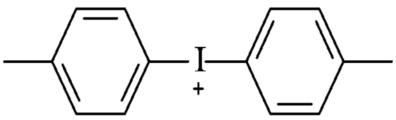 , 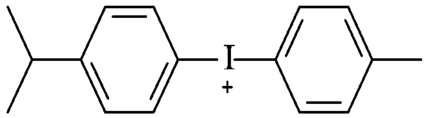 ,

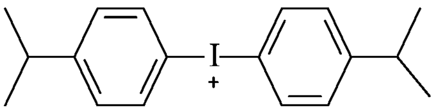 , 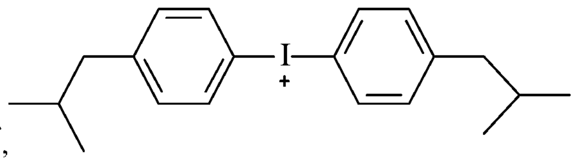 ,

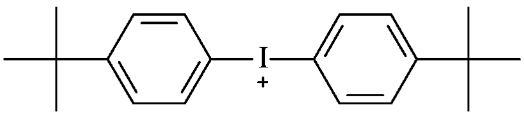 , 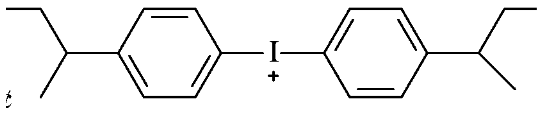 ,

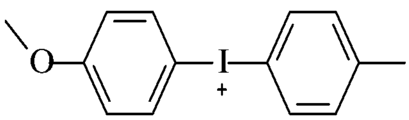 , 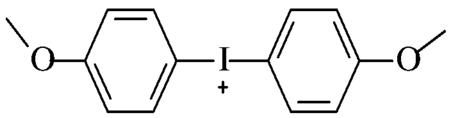 ,

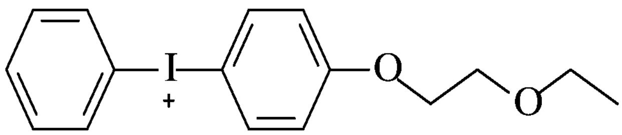 ,

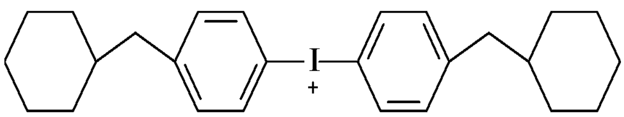 ,

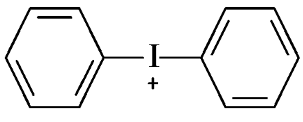 , 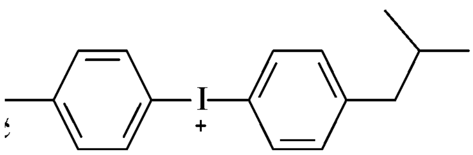 ,

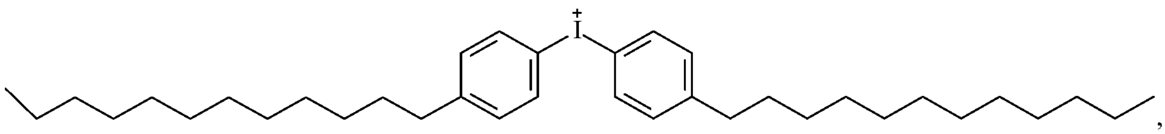

,

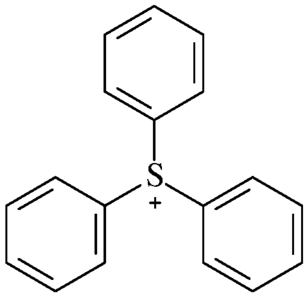

,

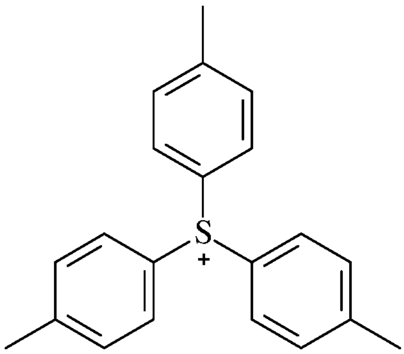

,

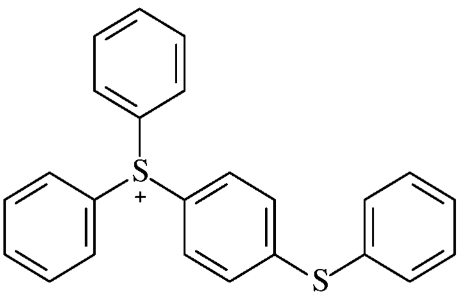

,

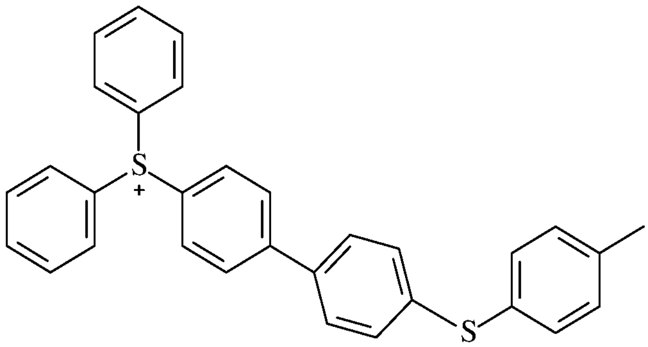

,

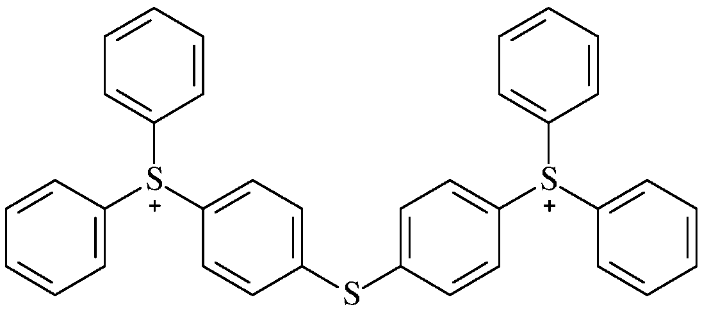

,

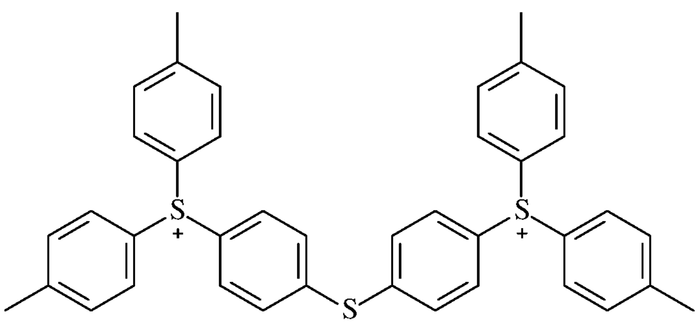

,

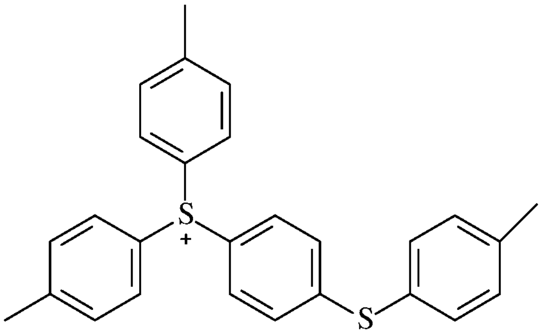

,

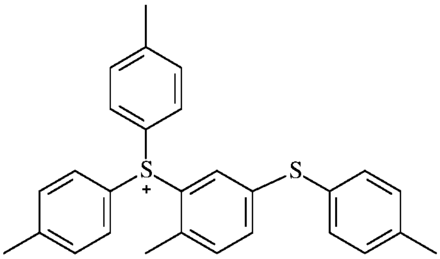

,

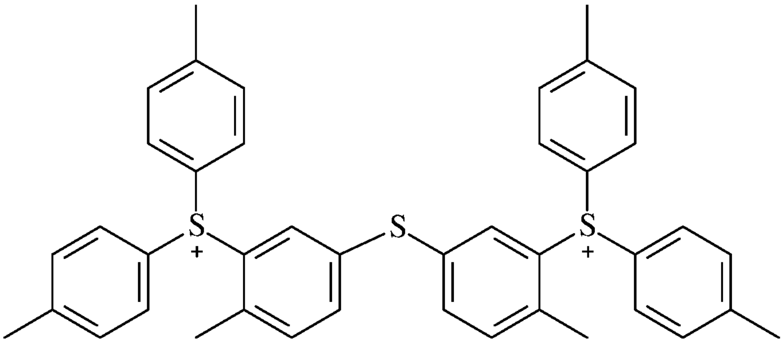

,

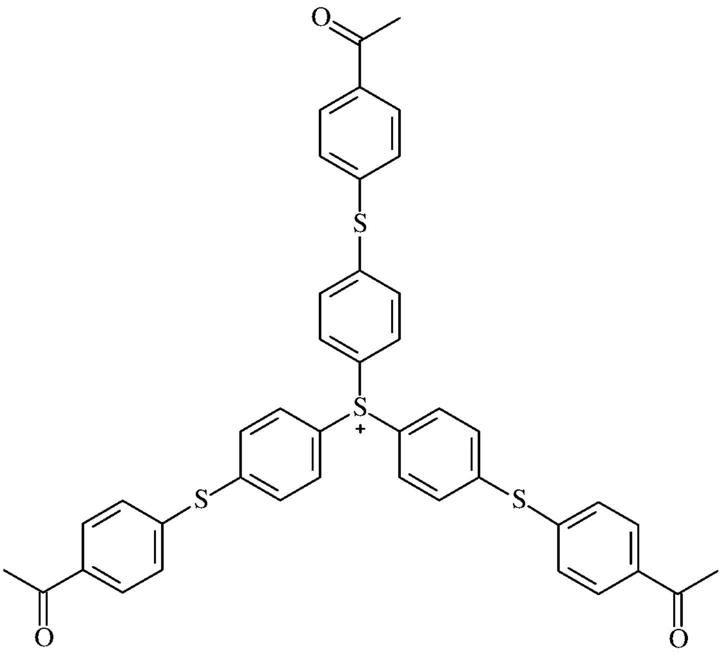

,

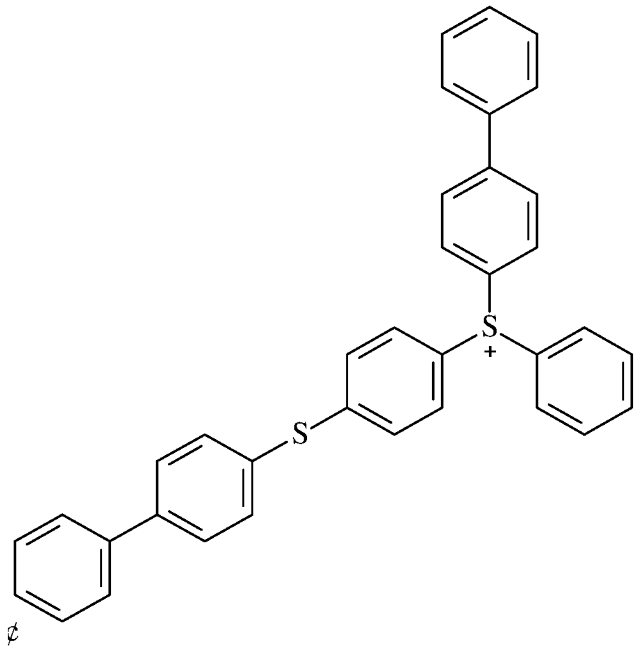

,

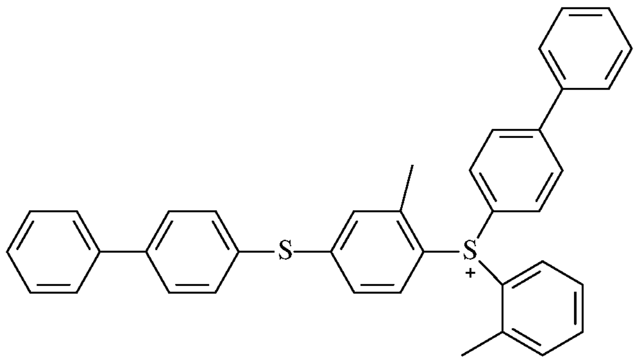

.

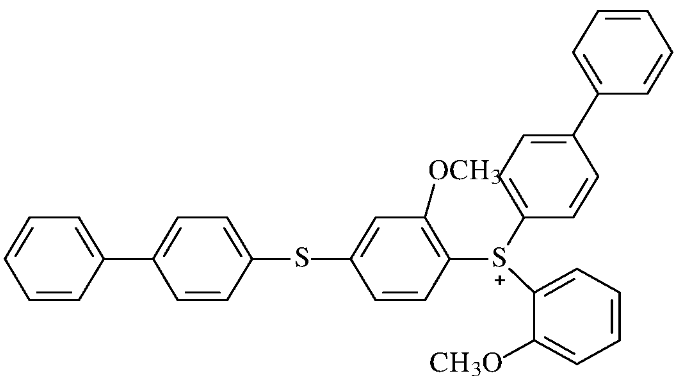

,

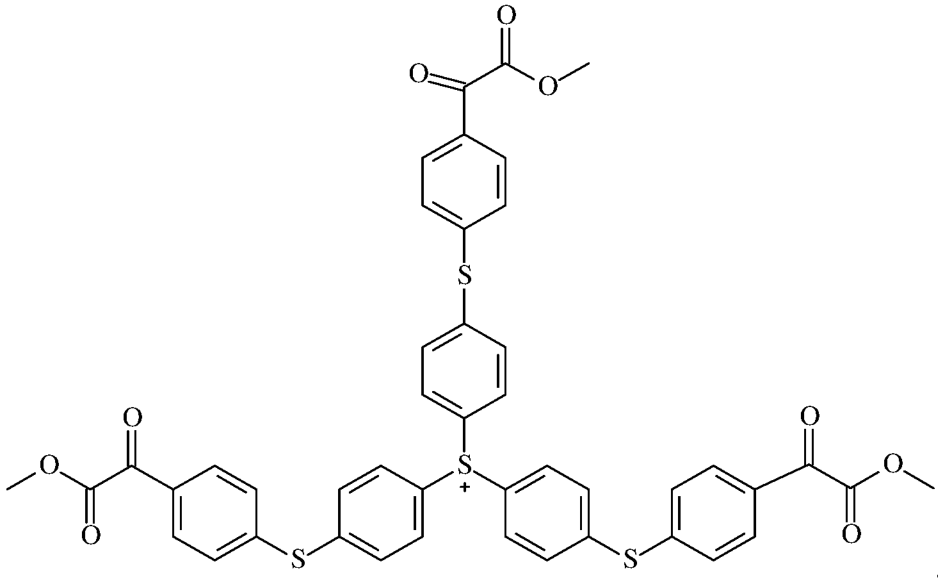,
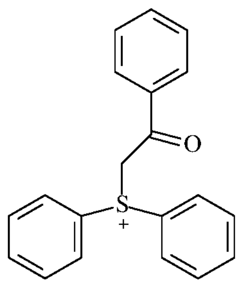.

In one preferred embodiment, an anionic moiety in the cationic initiator (D) includes but not limited to $Cl^-$, $Br^-$, $PF_6^-$, $SbF_6^-$, $AsF_6^-$, $BF_4^-$, $C_4F_9SO_3^-$, $B(C_6H_5)_4^-$, $C_8F_{17}SO_3^-$, $CF_3SO_3^-$, $Al[OC(CF_3)_3]_4^-$, $(CF_3CF_2)_2PF_4^-$, $(CF_3CF_2)_3PF_3^-$, $[(CF_3)_2CF_2]_2PF_4^-$ , $[(CF_3)_2CF_2]_3PF_3^-$, $[(CF_3)_2CFCF_2]_2PF_4^-$ or $(CF_3)_2CFCF_2]_3PF_3^-$.

In addition, commercially available cationic initiators with the same structure may also be used for the photoinitiator (D) of the present disclosure, such as one or more of PAG20001, PAG20002, PAG30201, PAG30101 produced by Changzhou Qiangli Electronic New Materials Co., Ltd., and Irgacure250 produced by BASF Company.

The cationic initiator (D) component of the present disclosure may use the above compounds alone or in combination of two or more compounds

## <Assistant (E)>

In order to further improve the comprehensive performance of the cationic curing composition, the above cationic curing composition further includes an assistant (E), and the assistant (E) includes but is not limited to one or more in a group consisting of a sensitizer, a color material, a flame retardant, a leveling agent, a curing accelerator, a light/thermal acid generator, an adhesion promoter, an ultraviolet absorber, an anti-agglomeration agent, a thickener, a nucleating agent, a coupling agent, a filler, a plasticizer, an impact resistant modifier, a lubricant, an antimicrobial agent, a mold release agent, a heat stabilizer, an antioxidant, a light stabilizer, a compatibilizer, a colorant, a stabilizer, a separant, an antistatic agent, a defoamer, and a fire retardant. More preferably, in parts by weight, the above cationic curing composition includes 0-40 parts of the assistant (E), and further preferably 1-10 parts of the assistant (E).

In one preferred embodiment, the sensitizer may be optionally added to the above cationic curing composition. The addition of the sensitizer is beneficial to further improve the light sensitivity of the composition, or to meet the requirements of photocuring under a long-wavelength light source, especially an ultraviolet light emitting diode (UV-LED). More preferably, the above sensitizer includes but is not limited to one or more in a group consisting of a thioxanthone compounds, a xanthones, an acridine compound, an anthracene compound and a coumarin compound, and further preferably, it is the anthracene compound and/or the thioxanthone compound. For example, JRCure-1105 (ITX), and JRCure-1106 (DETX) produced by Tianjin Jiuri New Materials Co., Ltd.; and PSS303, PSS510, PSS513, PSS515, and PSS519 produced by Changzhou Tronly New Electronic Materials Co., Ltd.

In addition, the sensitizer may also be selected from compounds containing the following structures:

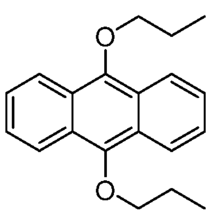, 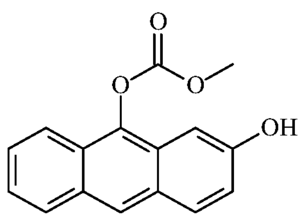, 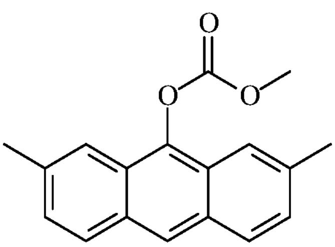, 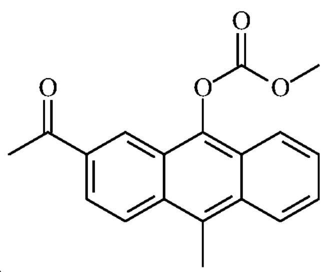,

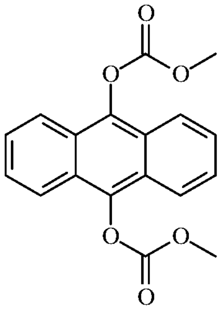

,

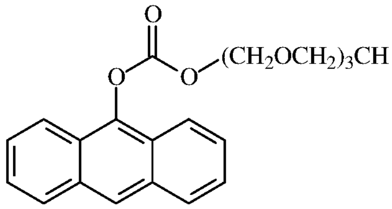

,

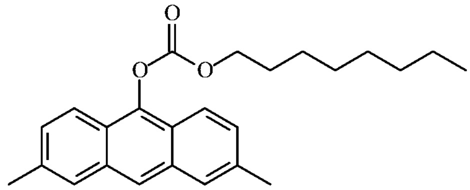

,

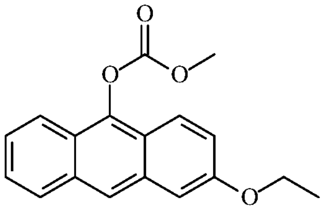

,

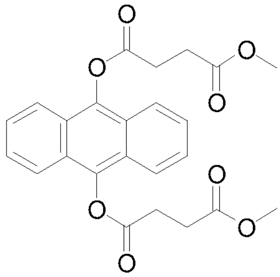

,

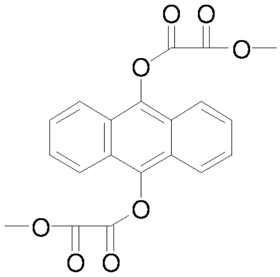

,

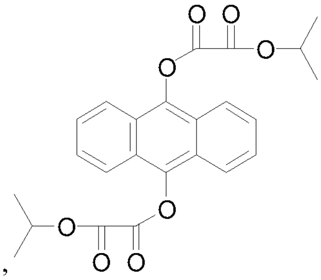

,

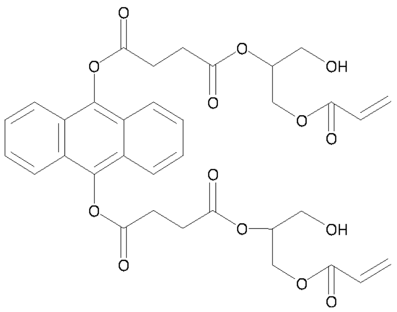

,

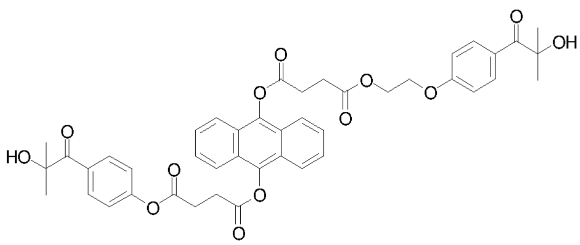

,

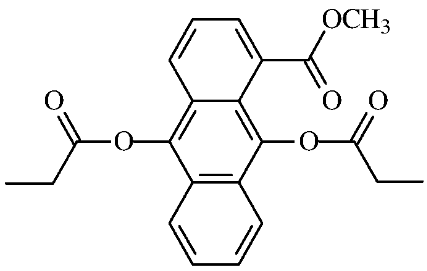

,

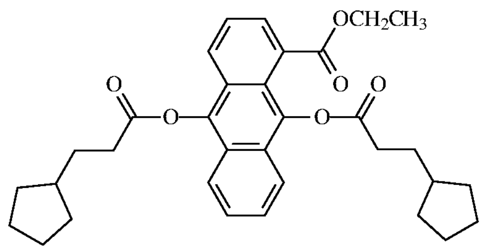

,

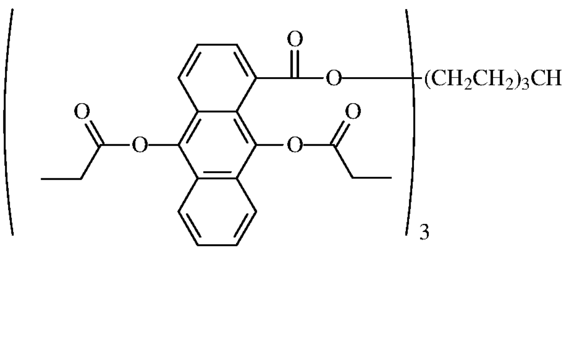

,

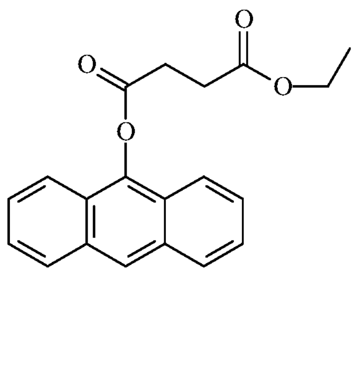

,

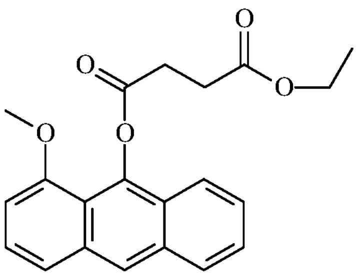

,

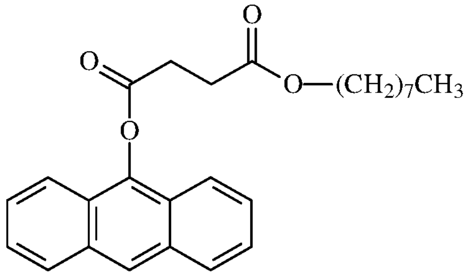

,

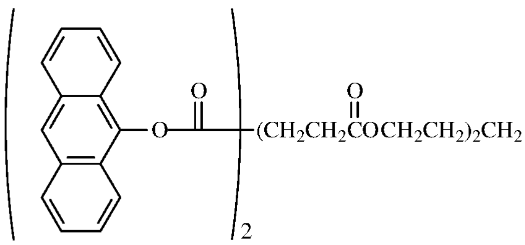

,

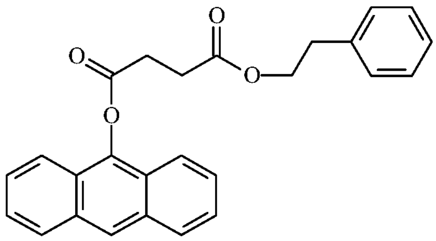

,

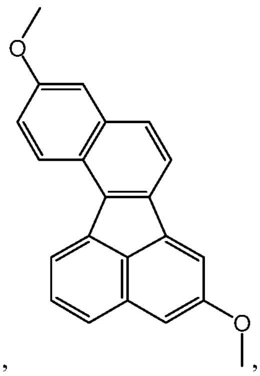

,

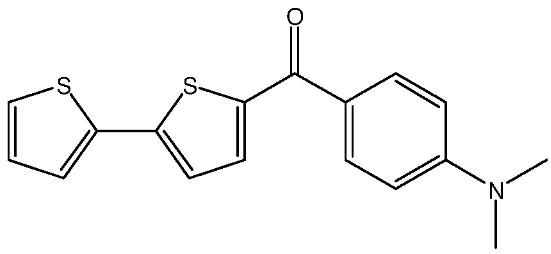

;

In one preferred embodiment, the addition amount of the sensitizer is 0-0.1 times of the total weight of the component A, the component B, the component C and the component D, preferably 0.005-0.06 times.

In another preferred embodiment, the cationic curing composition of the present disclosure may selectively add the color material, where the color material includes one or more in a group consisting of a pigment, a colorant, a dye and a natural pigment.

The blue pigment or cyan pigment is preferably Pigment Blue 1, 2, 3, 15, 15:1, 15:2, 15:3, 15:4, 15:6, 16, 17-1, 22, 27, 28, 29, 36, and 60; examples of the green pigment include Pigment Green 7, 26, 36, and 50.

The red pigment or magenta pigment is preferably Pigment Red 1, 2, 3, 4, 5, 6, 7, 8, 9, 10, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, iron oxide and the like; examples of the purple pigmen include Pigment Violet 3, 19, 23, 29, 30, 37, 50, and 88; and examples of the orange pigment include Pigment Orange 13, 16, 20, and 36.

The yellow pigment is preferably Pigment Yellow 1, 2, 3, 4, 5, 6, 7, 10, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193.

The black pigment is preferably Pigment Black 7, 28, 26, furnace black, lamp black, acetylene black, and channel black; Mitsubishi Chemical NO.2300, NO.900, MCF88, NO.33, NO .40, NO.45, NO.52, MA7, MA8, and MA100; and carbon black produced by Cabot Japan such as Regal 400R, Regal 300R, Regal 660R, Monarch 800, Monarch 880, Monarch 900, Monarch 1000, Monarch 1100, Monarch 1300, and Monarch 1400.

The white pigment is preferably Pigment White 6, 18, 21, titanium oxide and the like.

In the cationic curing composition of the present disclosure, the addition amount of the color material is 0-40%, preferably 1-10%, of the total weight of the component A, the component B, the component C and the component D. The average particle size of the color material is not particularly limited, and may be appropriately selected according to an intended application.

In the present disclosure, in order to disperse the color material in the cationic curing composition of the present

disclosure stably, preferably, the above cationic curing composition further includes a dispersing monomer and/or a dispersing assistant. Relative to 100 parts of the color material by weight, the content of the dispersing assistant is 30-80 parts by weight, and the sum of the weight fraction of the dispersing monomer and the weight fraction of the color material is 100%.

As the dispersing assistant that may be used in the present disclosure, it is preferably a polymer dispersant, more preferably, the above polymer dispersant include but not limited to DISPERBYK-101/102/103/106/111/161/162/163/164/166/167/168/170/171/174/182 produced by BYK Chemie; EFKA4010/4046/4080/5010/5207/5244/6745/6750/7414/7462/7500/7570/7575/7580 produced by EFKA Additive; DISPERSE AID 6/8/15/9100 produced by San Nopco Limited; SOLSPERSE dispersants: SOLSPERSE3000/5000/9000/12000/13240/13940/17000/22000/24000/26000/28000/32000/36000/39000/41000/71000 produced by Avecia; and ADEKA PLURONIC L31/F38/L42/L44/L61/L64/F68/L72/P95/F77/P84/F87/P94/L101/P103/F108/L121 produced by Adeka Corporation. There are no particular limitation on the dispersing monomers that may be used in the present disclosure. For example, a polymerizable compound having a low molecular weight may be used, preferably a polymerizable compound with low viscosity.

Another aspect of the present disclosure further provides a coating material, and the coating material includes the above cationic curing composition.

Under the initiation of the initiator (D), the polyhydroxy resin (A), the epoxy compound (B) and the oxetanyl-containing compound (C) may undergo a curing reaction, to form the coating layer. The addition of the epoxy compound (B) and the oxetanyl-containing compound (C) is beneficial to improve the curing rate of the coating layer. The addition of the polyhydroxy resin (A) increases the cross-linking density and improve the adhesion of the coating layer on a metal substrate, and the addition of the oxetanyl-containing compound (C) is beneficial to improve the compatibility of each component. The molar ratio of the hydroxyl, the three-membered epoxy group to the four-membered epoxy group in the above cationic curing composition is limited within the above range, and it may greatly improve the adhesion, the flexibility, the film-forming property and the curing rate of the coating layer on the plastic substrate. On this basis, the coating layer formed by the coating material containing the above cationic curing composition has the advantages of strong adsorption force, good flexibility and film-forming property, and fast curing rate.

**<Curing light source>**

After the cationic curing composition is applied to the plastic substrate, actinic radiation curing is performed to form a lacquer film.

"Actinic radiation" is light having a wavelength of electromagnetic radiation ranging from the ultraviolet range to the visible range to the infrared range. The actinic radiation that may be used to cure the cationic curing composition of the present disclosure generally has a radiation wavelength in the range of 150-2000nm, preferably a radiation wavelength in the range of 200-600nm. An illumination source with a highly sensitive wavelength may be appropriately selected for use according to the type and the like of the cationic polymerization initiator in the composition. The suitable ultraviolet light sources may be listed as: mercury arc, carbon arc, low, medium or high-pressure mercury lamp, eddy current plasma arc and ultraviolet light emitting diode, and the preferred ultraviolet light source is a medium pressure mercury lamp. The irradiation dose of the lacquer film is 10-1000mJ/$cm^2$, and preferably 50-500mJ/$cm^2$.

In addition, after the actinic radiation, the lacquer film may be heated as needed to reduce an unreacted substance in the lacquer film, and to relieve the lacquer film strain caused by the actinic radiation and the forming process. The heating process may improve the hardness and adhesion of the lacquer film. Preferably, the temperature of the above heating process is 150 to 250°C, and the heating time is 1 to 30 min.

The cationic curing composition provided in the present disclosure may be applied in the field of energy curing, and is especially suitable for being applied to the plastic substrate.

**<Plastic substrate>**

The cationic curing composition provided by the present disclosure is suitable for coating on the plastic substrate. The plastic substrate used in the present disclosure may be a conventional plastic substrate in the field, without particular limitation. In one preferred embodiment, the plastic substrate of the present disclosure may include polystyrene (PS), polypropylene (PP), polyethylene (PE), polyvinyl chloride (PVC), polyurethane (PUR), glass fiber reinforced unsaturated polyester, polymethyl methacrylate (PMMA), polyphenylene sulfide (PPS), polyoxymethylene (POM), polyphenylene oxide (PPO), polyurea, polybutylene terephthalate (PBT), polyethylene terephthalate (PET), polycarbonate (PC), acrylonitrile-butadiene-styrene copolymer (ABS), nylon, ethylene-propylene-diene copolymer (EPDM) modified polypropylene and the like, or may also be a plastic substrate of the above plastic mixtures. If necessary, the above plastic substrates may be pretreated by known methods, such as degreasing, and water-washing.

**<Coated product containing plastic substrate >**

In another aspect of the present disclosure, a plastic product is further provided, including a plastic substrate and a coating layer coated on at least a partial region of the above plastic substrate, where the coating layer is formed by curing the above cationic curing composition for the plastic substrate. The cationic curing composition may be applied to the plastic substrate by a conventional means, where the conventional means includes but is not limited to brushing, rolling, dipping, pouring, spraying and the like. The entire plastic substrate surface may be coated, or only a partial region of it may be coated. The thickness of a coating film may be appropriately selected according to the application, and usually, the thickness of the dry coating film is about 2-20μm, and more preferably 2-8μm.

The present disclosure is further described in detail below with reference to specific embodiments, and these embodiments should not be construed as limiting a scope of protection claimed by the present disclosure.

**The raw materials adopted in the embodiments and contrast examples are as follows.**

**<Polyhydroxy resin (A)>**

Polyester resin (A1-1): PCL210, hydroxyl value: 109-119mgKOH/g (Japan Daicel Co., Ltd.).

Polyester resin (A1-2): Capa™, hydroxyl value: 294-328mgKOH/g (Perstorp Co., Ltd.).

Polyester acrylic resin (A2-1): RA35.2, hydroxyl value: 95-105mgKOH/g (Weisheng Chemical Co., Ltd.).

Acrylic resin (A2-2): SETAQUA®6522, hydroxyl value: 79mgKOH/g (Allnex Resin Co., Ltd.).

Phenolic resin (A3-1): F51, epoxy value: 0.51 (hydroxyl value: about 150mgKOH/g) (Changzhou Xiangyang New Materials Co., Ltd.).

Phenolic resin (A3-2): E44, epoxy value: 0.44 (hydroxyl value: about 210mgKOH/g) (Miki 6101 Co., Ltd.).

**<Epoxy compound (B)>**

B1: 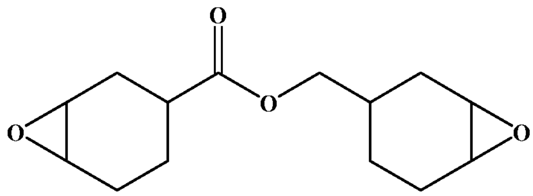 (Taitel TTA21);

B2: 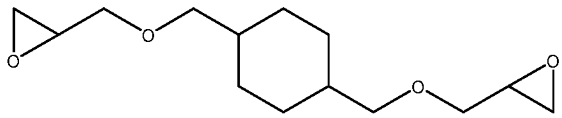 ;

B3: 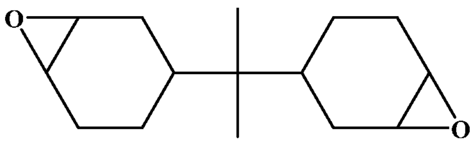 (Changzhou Tronly TCM234);

B4: 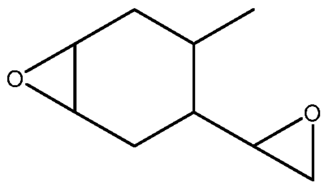 ;

B5: 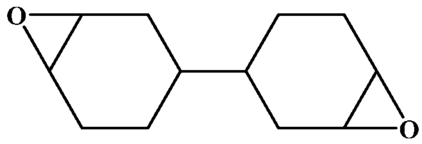 ;

B6: 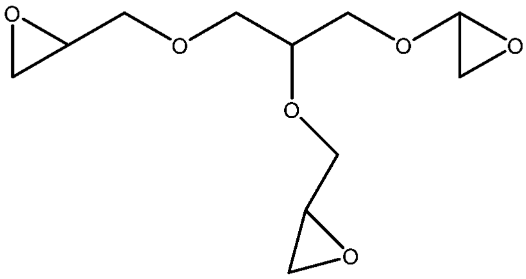 ;

<Oxetanyl-containing compound (C)>

C1: 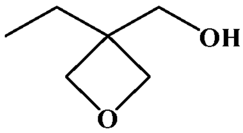 (Changzhou Tronly TCM101);

C2: 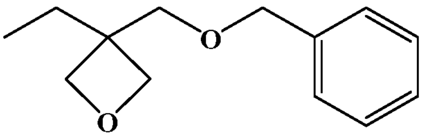 (Changzhou Tronly TCM104);

C3: 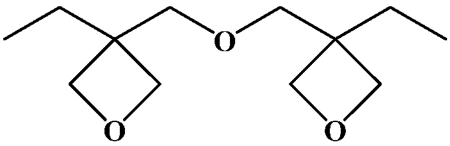 (Changzhou Tronly TCM201);

C4: 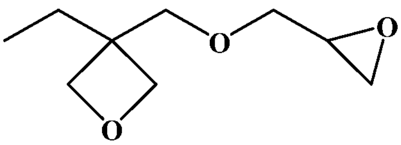 (Changzhou Tronly TCM207);

C5: 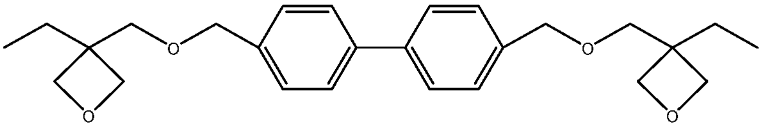 (Changzhou Tronly TCM207);

C6: 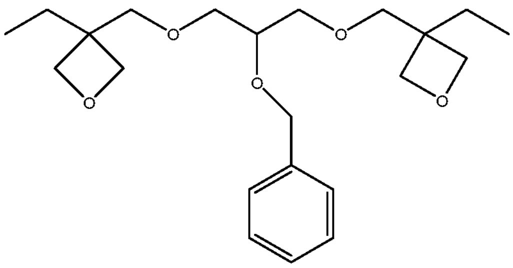 (Changzhou Tronly TCM210);

<Cationic initiator (D)>

D1: triphenylsulfonium hexafluorophosphate (Changzhou Tronly PAG20002s).
D2: diphenyliodonium hexafluoroantimonate (Changzhou Tronly PAG30202).

**<Assistant (E)>**

E1: sensitizer PSS306 (Changzhou Tronly Co., Ltd.);

E2: leveling agent BYK307 (BYK, Germany);

E3: defoamer BYK055 (BYK, Germany).

**<Colorless cationic curing composition>**

Under the conditions of room temperature and yellow luminescence, according to the formulas shown in Tables 1 and 2, the components are pre-mixed uniformly, and then dispersed at 1500-2000rpm of a high rotation rate for 30 minutes by using a stirrer, so that the components are mixed uniformly, and after being filtered by a filter screen, the colorless cationic curing composition is prepared.
The formulas shown in Tables 1 and 2 are the weight parts of each component, and the unit is "g". The numbers in parentheses indicate the amount of the substance containing the functional group in the corresponding substance, and the unit is "mol".

Table 1

| Component | | Embodiments | | | | | | | | | |
|---|---|---|---|---|---|---|---|---|---|---|---|
| | | 1 | 2 | 3 | 4 | 5 | 6 | 7 | 8 | 9 | 10 |
| | A1-1 | | | | | | | 125(0.25) | | | 63(0.125) |
| | A1-2 | | | | 47(0.25) | | | | | | |
| | A2-1 | 140(0.25) | 140(0.25) | 140(0.25) | | 140(0.25) | | | | | |
| | A2-2 | | | | | | 178(0.25) | | | 89(0.125) | 89(0.125) |
| | A3-1 | | | | | | | | | | |
| | A3-2 | | | | | | | | 67(0.25) | 34(0.125) | |
| | B1 | 126(1) | | 126(1) | 126(1) | | | | | | 126(1) |
| | B2 | | 128(1) | | | | | 128(1) | 290(2.5) | 96(0.75) | |
| | B3 | | | | | 118(1) | 118(1) | | | | |
| | B6 | | | 82(1) | 82(1) | | | | | | 82(1) |
| | CI | | 116(1) | 116(1) | 116(1) | | | 232(2) | 435(3.75) | 145(1.25) | 116(1) |
| | C2 | | | 194(1) | 194(1) | 194(1) | 194(1) | | | | 194(1) |
| | C3 | 268(2.5) | 161(1.5) | | | 107(1) | 107(1) | | | | |
| | C4 | | | | | | | 172(2) | | | |
| | D1 | 14 | 14 | | | 14 | 7 | 20 | 18 | 14 | |
| | D2 | | | 14 | 14 | | 7 | | | | 14 |
| | E1 | 3 | 3 | 3 | 3 | 3 | 3 | 3 | 3 | 3 | 3 |
| | E2 | 3 | 3 | 3 | 3 | 3 | 3 | 3 | 3 | 3 | 3 |
| | E3 | 3 | 3 | 3 | 3 | 3 | 3 | 3 | 3 | 3 | 3 |

Table 2

| Component | | Embodiments | | Contrast examples | | | | |
|---|---|---|---|---|---|---|---|---|
| | | 11 | 12 | 1 | 2 | 3 | 4 | 5 |
| | A1-1 | 125(0.25) | | 125(0.25) | | | | |
| | Al-2 | | | | | | | |
| | A2-1 | | 15(0.025) | | | 140 | 140 | |
| | A2-2 | | | | 178(0.25) | | | 178 |
| | A3-1 | | | | | | | |
| | A3-2 | | | | | | | |
| | B1 | 63(0.5) | 32(0.25) | | | 403 | | |
| | B2 | | | 32(0.25) | 32(0.25) | | | |
| | B3 | 30(0.25) | 30(0.25) | | | | | |
| | B6 | | | | | | | |
| | C1 | | 73(0.625) | 29(0.25) | | | 101 | 101 |
| | C2 | | | | | | | 161 |
| | C3 | 30(0.25) | | | 321(3) | | 161 | |
| | C4 | | | | | | | |
| | D1 | | 8 | | 8 | 14 | | 14 |
| | D2 | 14 | | 14 | | | 14 | |
| | E1 | 3 | 1 | 3 | 1 | 3 | 3 | 3 |
| | E2 | 3 | 1 | 3 | 1 | 3 | 3 | 3 |
| | E3 | 3 | 1 | 3 | 1 | 3 | 3 | 3 |

In the cationic curing compositions of Embodiments 1 to 12 and Contrast examples 1 to 2, the molar ratios of the hydroxyl, the three-membered epoxy group to the four-membered epoxy group are shown in Table 3.

Table 3

| | Molar ratio of hydroxyl, three-membered epoxy group to four-membered epoxy group | After conversion |
|---|---|---|
| Embodiment 1 | 0.25:1:2.5 | 1:4:10 |
| Embodiment 2 | 0.25:1:2.5 | 1:4:10 |
| Embodiment 3 | 0.25:2:2 | 1:8:8 |
| Embodiment 4 | 0.25:2:2 | 1:8:8 |
| Embodiment 5 | 0.25:1:2 | 1:4:8 |
| Embodiment 6 | 0.25:1:2 | 1:4:8 |
| Embodiment 7 | 0.25:2:3 | 1:8:12 |
| Embodiment 8 | 0.25:2.5:3.75 | 1:10:15 |
| Embodiment 9 | 0.25:0.75:1.25 | 1:3:5 |
| Embodiment 10 | 0.25:2:2 | 1:8:8 |
| Embodiment 11 | 0.25:0.75:0.25 | 1:3:1 |
| Embodiment 12 | 0.025:0.5:0.625 | 1:20:25 |

(continued)

| | Molar ratio of hydroxyl, three-membered epoxy group to four-membered epoxy group | After conversion |
|---|---|---|
| Contrast example 1 | 0.25:0.25:0.25 | 1:1:1 |
| Contrast example 2 | 0.25:0.25:3 | 1:1:12 |

**<Colored cationic curing composition>**

**Pigment dispersion preparation:**

At a room temperature, after the components are pre-mixed uniformly according to the formula shown in Table 4, it is stirred at 800-1000rpm of a rotation rate for 1 h by using the stirrer, and then stirred at 2000-3000 rpm of a rotation rate until D90 of the pigment dispersion (a OMEC TopSizer laser particle size analyzer is used for testing) is below 1.50μm, the stirring is stopped to obtain pigment dispersion-1, dispersion-2, dispersion-3 and dispersion-4.
The formula shown in Table 4 is the weight parts of each component, and the unit is "g".

Table 4

| Component | | Pigment dispersion | | | |
|---|---|---|---|---|---|
| | | Dispersion-1 | Dispersion-2 | Dispersion-3 | Dispersion-4 |
| Color material | Pigment black | 20 | | | |
| | Pigment white | | 50 | | |
| | Pigment blue | | | 15 | |
| | Pigment red | | | | 25 |
| Dispersing assistant | Solsperse24000 | 3 | 6 | 4.5 | 1.5 |
| | Solsperse28000 | 3 | 9 | | 6 |
| Dispersing monomer | B5 | 50 | 40 | 65 | 30 |
| | C3 | | | 10 | |
| | C5 | 30 | 10 | 10 | 45 |

In the above formula, the pigment black is Mitsubishi MA7; the pigment white is Ishihara titanium dioxide R706; the pigment blue is BASF phthalocyanine blue 15:3; and the pigment red is Clariant 122.

**Preparation of colored cationic curing composition:**

Under the conditions of room temperature and yellow luminescence, after the components are pre-mixed uniformly according to the formula shown in Table 5, it is dispersed at 1500-2000rpm of a high rotation rate for 30 min by using the stirrer, so that it is mixed uniformly, and after being filtered by the filter screen, the colored cationic curing combination is prepared.
The formula shown in Table 5 is the weight parts of each component, and the unit is "g". The numbers in parentheses indicate the amount of the substance containing the functional group in the corresponding substance, and the unit is "mol".

Table 5

| Component | | Embodiments | | | | | | Contrast examples | | |
|---|---|---|---|---|---|---|---|---|---|---|
| | | 13 | 14 | 15 | 16 | 17 | 18 | 6 | 7 | 8 |
| A | A1-1 | | | | 125 (0.25) | | 63 (0.125) | 125 | 125 | |
| | A2-1 | 140 (0.25) | | 140 (0.25) | | 70 (0.125) | 70 (0.125) | | | 140 (0.25) |
| | A2-2 | | 178 (0.25) | | | 89 (0.125) | | | | |
| B | B2 | 256(2) | | | | | 128(1) | | 256 | 32 (0.25) |
| | B4 | | | | 154(2) | 154(2) | | | | |
| | B5 | | 97(1) | 97(1) | | | 97(1) | | | |
| C | C1 | | 232(2) | 116(1) | 348(3) | 232(2) | 116(1) | | | 29 (0.25) |
| | C5 | 410(2) | 103 (0.5) | | | | 205(1) | 410 | | |
| | C6 | | | 189(1) | | 189(1) | | | | |
| D | D1 | 25 | 25 | 25 | 25 | 25 | 25 | 25 | 25 | 25 |
| E | E1 | 4 | 4 | 4 | 4 | 4 | 4 | 4 | 4 | 4 |
| | E2 | 4 | 4 | 4 | 4 | 4 | 4 | 4 | 4 | 4 |
| | E3 | 4 | 4 | 4 | 4 | 4 | 4 | 4 | 4 | 4 |
| Pigment dispersion | Dispersion-1 | 250 | | | | | | 250 | 250 | 250 |
| | Dispersion-2 | | 250 | | | | | | | |
| | Dispersion-3 | | | 250 | | | | | | |
| | Dispersion-4 | | | | 250 | | | | | |
| Pigment | Carbon black | | | | | 60 | | | | |
| | Titanium dioxide | | | | | | 60 | | | |

In the cationic curing composition of Embodiments 13 to 18 and Contrast example 8, the molar ratios of the hydroxyl, the three-membered epoxy group to the four-membered epoxy group are shown in Table 6.

Table 6

| | Molar ratio of hydroxyl, three-membered epoxy group to four-membered epoxy group | After conversion |
|---|---|---|
| Embodiment 13 | 0.25:2:2 | 1:8:8 |
| Embodiment 14 | 0.25:1:2.5 | 1:4:10 |
| Embodiment 15 | 0.25:1:2 | 1:4:8 |
| Embodiment 16 | 0.25:2:3 | 1:8:12 |

(continued)

| | Molar ratio of hydroxyl, three-membered epoxy group to four-membered epoxy group | After conversion |
|---|---|---|
| Embodiment 17 | 0.25:2:3 | 1:8:12 |
| Embodiment 18 | 0.25:2:2 | 1:8:8 |
| Contrast example 8 | 0.25:0.25:0.25 | 1:1:1 |

**Performance testing**

A performance evaluation test is performed after film-forming of the cationic curing compositions shown in Tables 1 to 2 and Table 5.

The operation is as follows:

PET and PP are used as substrates, coating is performed after wiping with acetone, and the coating layer thickness is $25\pm5\mu m$. The performance thereof is tested after curing completely, and test results are shown in Tables 7 and 8.

Testing method:

(1) Hardness test: with reference to a national standard GB/T6739-86, a group of drawing pencils with hardness of 6B-6H are prepared, and the pencil hardness of the coating film is measured manually. A coating film plate is horizontally placed on the mesa, the pencil is held by a hand at an angle of 45°, and the coating film surface is pushed with a force at a uniform speed for about 1cm, and scratches are left on the coating film. 5 scratches are repeated by the pencil with the same hardness mark number. If 2 or more scratches are not scratched on a bottom plate of a sample, the pencil with the higher hardness mark number is used until the coating film is scratched for 2 or more scratches. The mark number smaller than the pencil hardness is the pencil hardness of the coating film.

(2) Adhesion test: with reference to a national standard GB/T9286-1998, the adhesion of the lacquer film on a PET film or a PP film is respectively tested. A knife is used to cut 6 parallel cuts on the coating film, and it should cut through the whole depth of the coating film; then the same 6 cuts are cut, it is perpendicular to the former, to form many small squares, and then a translucent pressure-sensitive tape with a width of 25mm is used to be attached to the entire cut and scratched grid, the tape is yanked, and compared with the standard, the level of adhesion of the coating film is determined.

(3) Flexibility test: with reference to a national standard GB1731, the composition is coated on the PET film, after being cured, the lacquer film surface faces up, a test sample is tightly pressed on a shaft rod with a required diameter, and it is bent around the shaft rod, after being bent, both thumbs should be symmetrical to a centerline of the shaft rod. Visually or using a four-fold magnification mirror to observe the lacquer film whether there are damage phenomena, such as reticulation, cracks and peeling, and the flexibility of the lacquer film is indicated by the minimum shaft rod diameter at which the sample is bent on the shaft rods with the different diameters without causing the damage to the lacquer film, the diameter of the shaft rod is smaller, and the flexibility is better.

(4) Curing time test: with reference to a national standard GB/T1728-79, the composition is sprayed on the PET film, and the curing time of the composition is measured respectively.

(5) Volatile organic compound (VOC) test: 0.2g of the sample is weighed and applied to the weighed PET film, and it is weighed; the coated sample is solidified, and cooled for 15 min at the room temperature, and it is weighed; and then the coating film is placed in a ventilated oven at 110°C and dried for 1h, the coating film is placed in a dryer and cooled to the room temperature, and it is weighed.

$$\text{Processed volatile} = 100[(B-C)/(B-A)];\ \text{and Potential volatile} = 100[(C-D)/(B-A)];$$

$$\text{Total volatile \%} = \text{Processed volatile \%} + \text{Potential volatile \%};$$

where: A is the weight of the PET film, g; and B is the weight of the coating film and PET film, g.

C is the weight of the coating film and PET film after curing, g; and D is the weight of the coating film and PET film after curing and heating, g.

Table 7

| Item | Embodiments | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Adhesion (PET)/level | 0 | 0 | 0 | 0 | 0 | 0 | 0 | 0 | 0 | 0 | 0 | 3 |
| Adhesion (PP)/ level | 0 | 0 | 0 | 0 | 0 | 0 | 0 | 0 | 0 | 0 | 0 | 3 |
| Hardness/H | 6 | 6 | 5 | 5 | 6 | 6 | 6 | 6 | 7 | 5 | 5 | 5 |
| Flexibility/mm | 1.5 | 1.5 | 1 | 1 | 1.5 | 1.5 | 1.5 | 1.5 | 2 | 1 | 1 | 1 |
| Curing time/s | 6 | 6 | 5 | 5 | 6 | 6 | 6 | 6 | 7 | 5 | 3 | 5 |
| VOC discharge/% | 3 | 3 | 5 | 5 | 3 | 3 | 3 | 3 | 3 | 3 | 3 | 5 |

Table 8

| Item | Embodiment | | | | | | Contrast example | | | | | | | |
|---|---|---|---|---|---|---|---|---|---|---|---|---|---|---|
| | 13 | 14 | 15 | 16 | 17 | 18 | 1 | 2 | 3 | 4 | 5 | 6 | 7 | 8 |
| Adhesion (PET)/level | 0 | 0 | 0 | 0 | 0 | 0 | 1 | 2 | 5 | 4 | 5 | 4 | 5 | 1 |
| Adhesion (PP)/level | 0 | 0 | 0 | 0 | 0 | 0 | 1 | 2 | 5 | 4 | 4 | 4 | 5 | 1 |
| Hardness/H | 5 | 6 | 6 | 6 | 6 | 5 | 5 | 9 | 1 | 6 | 6 | 6 | 1 | 5 |
| Flexibility/mm | 1 | 2 | 2 | 2 | 2 | 1 | 1 | 3 | 0.5 | 1.5 | 1.5 | 2 | 0.5 | 1 |
| Curing time/s | 5 | 6 | 6 | 6 | 6 | 5 | 5 | 12 | 3 | 1500 | 1500 | 1500 | 3 | 5 |
| VOC discharge/% | 5 | 5 | 5 | 5 | 5 | 5 | 15 | 18 | 20 | 20 | 20 | 20 | 20 | 15 |

It may be seen from Table 7 and Table 8 that:
comparing Embodiments 1 to 12 and Contrast examples 3-5, it may be seen that the use of the cationic curing composition provided by the present disclosure is beneficial to greatly improve the comprehensive performance of the coating layer formed therefrom. Comparing Embodiments 1 to 12 and Contrast examples 1 to 2, it may be seen that limiting the molar ratio of the hydroxyl, the three-membered epoxy group to the four-membered epoxy group within the preferred range of the present disclosure is beneficial to improve the comprehensive performance of the coating layer formed therefrom; and comparing Embodiments 13 to 18 and Contrast examples 6 to 8, it may be seen that the use of the cationic curing composition provided by the present disclosure is beneficial to greatly improve the comprehensive performance of the coating layer formed therefrom.

In conclusion, the cationic curing composition of the present disclosure shows the excellent flexibility in both colorless system and colored system, has the good adhesion to the plastic substrate, is moderate in curing rate, and low in VOC discharge, and may be widely used in the plastic products.

The above are only preferred embodiments of the present disclosure, and are not intended to limit the present disclosure. For those skilled in the art, the present disclosure may have various modifications and changes. Any modifications, equivalent replacements, improvements and the like made within the spirit and principle of the present disclosure shall be included within a scope of protection of the present disclosure.

## Claims

1. A cationic curing composition for a plastic substrate, wherein the cationic curing composition for the plastic substrate comprising: a polyhydroxy resin (A), an epoxy compound (B), an oxetanyl-containing compound (C) and a cationic initiator (D), wherein the polyhydroxy resin (A) is selected one or more from a proup of a polyester resin (A1), an acrylic resin (A2) and a phenolic resin (A3), and a molar ratio of a hydroxyl, a three-membered epoxy group to a four-membered epoxy group in the cationic curing composition is 1:(3-20):(1-25).

2. The cationic curing composition for the plastic substrate according to claim 1, wherein in the cationic curing composition for the plastic substrate, the molar ratio of the hydroxyl, the three-membered epoxy group to the four-membered epoxy group is 1:(3-10):(5-15).

3. The cationic curing composition for the plastic substrate according to claim 1 or 2, wherein in parts by weight, the cationic curing composition for the plastic substrate comprising: 5-40 parts of the polyhydroxy resin (A), 10-65 parts of the epoxy compound (B), 10-70 parts of the oxetanyl-containing compound (C) and 0.5-10 parts of the cationic initiator (D).

4. The cationic curing composition for the plastic substrate according to claim 3, wherein in parts by weight, the cationic curing composition for the plastic substrate comprising: 5-30 parts of the polyhydroxy resin (A), 15-50 parts of the epoxy compound (B), 20-60 parts of the oxetanyl-containing compound (C) and 2-5 parts of the cationic initiator (D).

5. The cationic curing composition for the plastic substrate according to claim 1, wherein the hydroxyl value of the polyester resin (A1) is 50-500mgKOH/g, and the number-average molecular weight is 200-12000; and
preferably, the hydroxyl value of the polyester resin (A1) is 80-350mgKOH/g, and the number-average molecular weight is 300-5000.

6. The cationic curing composition for the plastic substrate according to claim 1, wherein the hydroxyl value of the acrylic resin (A2) is 15-200mgKOH/g, the glass transition temperature is 10-150°C, and the number-average molecular weight is 500-20000; and
preferably, the hydroxyl value of the acrylic resin (A2) is 50-150mgKOH/g, the glass transition temperature is 20-100°C, and the number-average molecular weight is 1000-8000.

7. The cationic curing composition for the plastic substrate according to claim 1, wherein the hydroxyl value of the phenolic resin (A3) is 50-300mgKOH/g, and the number-average molecular weight is 300-15000; and
preferably, the hydroxyl value of the phenolic resin (A3) is 100-250mgKOH/g, and the number-average molecular weight is 500-8000.

8. The cationic curing composition for the plastic substrate according to any one of claims 1 to 4, wherein the epoxy compound (B) is selected from an alicyclic epoxy compound and/or an aliphatic epoxy compound;

   preferably, the epoxy equivalent weight of the alicyclic epoxy compound is 80-500;
   preferably, the epoxy equivalent weight of the aliphatic epoxy compound is 80-500.

9. The cationic curing composition for the plastic substrate according to any one of claims 5 to 8, wherein in parts by weight, the cationic curing composition for the plastic substrate further comprising 0-40 parts of an assistant (E) by weight;

   preferably, the cationic curing composition for the plastic substrate comprising 1-10 parts of the assistant (E) by weight; and
   preferably, the assistant (E) is selected from one or more in a group consisting of a sensitizer, a color material, a flame retardant, a leveling agent, a curing accelerator, a light/thermal acid generator, an adhesion promoter, an ultraviolet absorber, an anti-agglomeration agent, a thickener, a nucleating agent, a coupling agent, a filler, a plasticizer, an impact resistant modifier, a lubricant, an antimicrobial agent, a mold release agent, a heat stabilizer, an antioxidant, a light stabilizer, a compatibilizer, a colorant, a stabilizer, a separant, an antistatic agent, a defoamer, and a fire retardant.

10. A coating material, wherein the coating material comprises the cationic curing composition for the plastic substrate according to any one of claims 1 to 9.

11. A plastic product, comprising a plastic substrate and a coating layer, wherein the coating layer is coated on at least a partial region of the plastic substrate, and the coating layer is formed by curing the cationic curing composition for the plastic substrate according to any one of claims 1 to 9.

12. An application of the cationic curing composition for the plastic substrate according to any one of claims 1 to 9 in the field of energy curing.

**INTERNATIONAL SEARCH REPORT**

International application No.
**PCT/CN2020/117189**

**A. CLASSIFICATION OF SUBJECT MATTER**

C08F 2/46(2006.01)i; C08G 59/18(2006.01)i; C09D 133/04(2006.01)i; C09D 163/00(2006.01)i

According to International Patent Classification (IPC) or to both national classification and IPC

**B. FIELDS SEARCHED**

Minimum documentation searched (classification system followed by classification symbols)

C08F, C08G, C09D

Documentation searched other than minimum documentation to the extent that such documents are included in the fields searched

Electronic data base consulted during the international search (name of data base and, where practicable, search terms used)

CNPAT, DWPI, CNKI: 阳离子, 光固化, 紫外固化, 引发剂, 羟基, 环氧, 氧杂环丁烷, 聚酯, 丙烯酸树脂, 丙烯酸酯, 酚醛树脂, cationic, photo, uv, initiator, hydroxyl, epoxy, oxetanyl, trimethylene oxide, polyester, acrylic resin, acrylate, phenol formaldehyde resin, phenolic resin,

**C. DOCUMENTS CONSIDERED TO BE RELEVANT**

| Category* | Citation of document, with indication, where appropriate, of the relevant passages | Relevant to claim No. |
|---|---|---|
| PX | CN 110389499 A (CHANGZHOU GREEN PHOTOSENSITIVE NEW MATERIAL CO., LTD.) 29 October 2019 (2019-10-29)<br>description, paragraphs 3-45 | 1-12 |
| X | CN 1724587 A (MITSUI CHEMICALS, INC.) 25 January 2006 (2006-01-25)<br>description, page 2 line 5 - page 9 line 12 | 1-12 |
| X | CN 101755238 A (HUNTSMAN ADV MAT AMERICAS INC) 23 June 2010 (2010-06-23)<br>description, paragraphs 14-268 | 1-12 |
| X | CN 108314911 A (CHANGZHOU GREEN PHOTOSENSITIVE NEW MATERIAL CO., LTD.) 24 July 2018 (2018-07-24)<br>description, paragraphs 5-58 | 1-12 |
| A | CN 108602923 A (PERSTORP AB) 28 September 2018 (2018-09-28)<br>entire document | 1-12 |
| A | CN 104673064 A (DONGLAI COATING TECHNOLOGY (SHANGHAI) CO., LTD.) 03 June 2015 (2015-06-03)<br>entire document | 1-12 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 November 2020** | **27 November 2020** |
| Name and mailing address of the ISA/CN<br>**China National Intellectual Property Administration (ISA/CN)**<br>**No. 6, Xitucheng Road, Jimenqiao Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/117189**

| Patent document cited in search report | Publication date (day/month/year) | Patent family member(s) | Publication date (day/month/year) |
|---|---|---|---|
| CN 110389499 A | 29 October 2019 | None | |
| CN 1724587 A | 25 January 2006 | KR 100649439 B1 | 27 November 2006 |
| | | US 2006020051 A1 | 26 January 2006 |
| | | JP 2006057078 A | 02 March 2006 |
| | | EP 1630215 A3 | 08 November 2006 |
| | | CN 100347236 C | 07 November 2007 |
| | | EP 1630215 A2 | 01 March 2006 |
| | | JP 4667145 B2 | 06 April 2011 |
| | | TW 200613329 A | 01 May 2006 |
| | | TW I277621 B | 01 April 2007 |
| | | EP 1630215 B1 | 21 March 2012 |
| | | US 7563832 B2 | 21 July 2009 |
| | | KR 20060053915 A | 22 May 2006 |
| CN 101755238 A | 23 June 2010 | CN 101755238 B | 02 January 2013 |
| | | KR 101721254 B1 | 29 March 2017 |
| | | EP 2137576 B1 | 29 August 2018 |
| | | JP 2010523801 A | 15 July 2010 |
| | | US 7964248 B2 | 21 June 2011 |
| | | JP 5559033 B2 | 23 July 2014 |
| | | EP 2137576 A1 | 30 December 2009 |
| | | KR 20100016451 A | 12 February 2010 |
| | | US 2010327493 A1 | 30 December 2010 |
| | | WO 2008127930 A1 | 23 October 2008 |
| CN 108314911 A | 24 July 2018 | None | |
| CN 108602923 A | 28 September 2018 | US 10501573 B2 | 10 December 2019 |
| | | SE 539314 C2 | 27 June 2017 |
| | | US 2019048132 A1 | 14 February 2019 |
| | | EP 3408306 A1 | 05 December 2018 |
| | | WO 2017131563 A1 | 03 August 2017 |
| | | EP 3408306 A4 | 04 September 2019 |
| | | EP 3408306 B1 | 17 June 2020 |
| | | SE 1600025 A1 | 27 June 2017 |
| CN 104673064 A | 03 June 2015 | CN 104673064 B | 03 November 2017 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 673986 T
- GB 92861998 T
- GB 1731 A
- GB 172879 T